# EUROPEAN PATENT APPLICATION

(11) **EP 4 557 826 A1**
(43) Date of publication of application: **21.05.2025**
(21) Application number: 23838949.8
(22) Date of filing: 11.07.2023
(51) Int. Cl.: H04W 28/18

(54) **TRANSMISSION PARAMETER ADJUSTMENT METHOD AND APPARATUS, RELAY DEVICE, NETWORK SIDE DEVICE, AND MEDIUM**

(30) Priority: 14.07.2022 CN 202210827982
(71) Applicant: Vivo Mobile Communication Co., Ltd., Dongguan, Guangdong 523863 (CN)
(72) Inventor: WANG, Huan, Dongguan, Guangdong 523863 (CN); LIU, Jinhua, Dongguan, Guangdong 523863 (CN); TAMRAKAR, Rakesh, Dongguan, Guangdong 523863 (CN)
(74) Representative: Michalski Hüttermann & Partner Patentanwälte mbB
(86) International application number: PCT/CN2023/106825
(87) International publication number: WO 2024/012458

(57) **Abstract**

This application discloses a transmission parameter adjustment method and apparatus, a relay device, a network-side device, and a medium, pertaining to the field of communications technologies. The transmission parameter adjustment method in embodiments of the invention includes: receiving, by a relay device, indication signaling sent by a network-side device, where the indication signaling carries transmission parameter related indication information for an access link of the relay device, and the transmission parameter related indication information includes transmission beam indication information; and adjusting a transmission parameter of the access link based on the transmission parameter related indication information. Another transmission parameter adjustment method in the embodiments of this application includes: determining, by a network-side device, transmission parameter related indication information for an access link of a relay device, where the transmission parameter related indication information includes transmission beam indication information; and sending indication signaling carrying the transmission parameter related indication information to the relay device.

## Description

### CROSS-REFERENCE TO RELATED APPLICATIONS

This application claims priority to Chinese Patent Application No. 202210827982.6, filed with the China National Intellectual Property Administration on July 14, 2022 and entitled "TRANSMISSION PARAMETER ADJUSTMENT METHOD AND APPARATUS, RELAY DEVICE, NETWORK-SIDE DEVICE, AND MEDIUM", which is incorporated herein by reference in its entirety.

### TECHNICAL FIELD

This application pertains to the field of communications technologies, and specifically relates to a transmission parameter adjustment method and apparatus, a relay device, a network-side device, and a medium.

### BACKGROUND

In a communication system, a relay device may be used to forward signals from a network-side device or a terminal and amplify the signals. A link between the relay device and the terminal may be referred to as an access link (Access link). A downlink signal sent by the network-side device to the terminal first arrives at the relay device and then is forwarded to the terminal through the access link of the relay device. Similarly, an uplink signal sent by the terminal to the network-side device first arrives at the relay device through the access link of the relay device and then is forwarded to the network-side device.

Performance of the access link of the relay device directly affects the signal transmission quality between the network-side device and the terminal. So, how to control and adjust a transmission parameter of the access link of the relay device through an air interface to improve the performance of the access link of the relay device and ensure the communication quality is a technical problem to be urgently resolved by persons skilled in the art.

### SUMMARY

Embodiments of this application provide a transmission parameter adjustment method and apparatus, a relay device, a network-side device, and a medium, so as to control and adjust transmission parameters of an access link of the relay device through an air interface to improve the performance of the access link of the relay device and ensure the communication quality.

According to a first aspect, a transmission parameter adjustment method is provided, including:
receiving, by a relay device, indication signaling sent by a network-side device, where the indication signaling carries transmission parameter related indication information for an access link of the relay device, and the transmission parameter related indication information includes transmission beam indication information; and
adjusting, by the relay device, a transmission parameter of the access link based on the transmission parameter related indication information.

According to a second aspect, a transmission parameter adjustment apparatus is provided, including:
a first receiving module, configured to receive indication signaling sent by a network-side device, where the indication signaling carries transmission parameter related indication information for an access link of the relay device, and the transmission parameter related indication information includes transmission beam indication information; and
an adjustment module, configured to adjust a transmission parameter of the access link based on the transmission parameter related indication information.

According to a third aspect, a transmission parameter adjustment method is provided, including:
determining, by a network-side device, transmission parameter related indication information for an access link of a relay device, where the transmission parameter related indication information includes transmission beam indication information; and
sending, by the network-side device, indication signaling carrying the transmission parameter related indication information to the relay device.

According to a fourth aspect, a transmission parameter adjustment apparatus is provided, including:
a second determining module, configured to determine transmission parameter related indication information for an access link of a relay device, where the transmission parameter related indication information includes transmission beam indication information; and
a sending module, configured to send indication signaling carrying the transmission parameter related indication information to the relay device.

According to a fifth aspect, a relay device is provided, including a processor and a memory, where a program or instructions capable of running on the processor are stored in the memory. When the program or the instructions are executed by the processor, the steps of the transmission parameter adjustment method according to the first aspect are implemented.

According to a sixth aspect, a network-side device is provided, including a processor and a memory, where a program or instructions capable of running on the processor are stored in the memory. When the program or the instructions are executed by the processor, the steps of the transmission parameter adjustment method according to the third aspect are implemented.

According to a seventh aspect, a communication system is provided, including a relay device and a network-side device, where the relay device may be configured to execute the steps of the transmission parameter adjustment method according to the first aspect, and the network-side device may be configured to execute the steps of the transmission parameter adjustment method according to the third aspect.

According to an eighth aspect, a readable storage medium is provided, where a program or instructions are stored in the readable storage medium, and in a case that the program or the instructions are executed by a processor, the steps of the transmission parameter adjustment method according to the first aspect are implemented, or the steps of the transmission parameter adjustment method according to the third aspect are implemented.

According to a ninth aspect, a computer program/program product is provided, where the computer program/program product is stored in a storage medium, and the computer program/program product is executed by at least one processor to implement the steps of the transmission parameter adjustment method according to the first aspect are implemented, or the steps of the transmission parameter adjustment method according to the third aspect.

In the embodiments of this application, the indication signaling sent by the network-side device and received by the relay device carries the transmission parameter related indication information for the access link of the relay device, and the transmission parameter related indication information includes the transmission beam indication information. Based on the transmission parameter related indication information, the transmission parameter of the access link is adjusted, so that control and adjustment of the transmission parameter of the access link of the relay device may be implemented through the air interface, performance of the access link of the relay device may be improved, and communication quality may be guaranteed. In addition, system performance and signaling overheads may be balanced effectively by refining the transmission parameter related indication information at the transmission beam level.

### BRIEF DESCRIPTION OF DRAWINGS

FIG. 1 is a block diagram of a wireless communication system to which embodiments of this application may be applied;
FIG. 2 is an implementation flowchart of a transmission parameter adjustment method according to an embodiment of this application;
FIG. 3 is a schematic diagram of a quasi co-location relation of beams according to an embodiment of this application;
FIG. 4 is a schematic diagram of beams used in different time periods according to an embodiment of this application;
FIG. 5 is a schematic diagram of a symbol group pattern according to an embodiment of this application;
FIG. 6 is a schematic diagram for determining a validation time of transmission parameter related indication information according to an embodiment of this application;
FIG. 7 is another schematic diagram for determining a validation time of transmission parameter related indication information according to an embodiment of this application;
FIG. 8 is a schematic structural diagram of a transmission parameter adjustment apparatus corresponding to FIG. 2 according to an embodiment of this application;
FIG. 9 is an implementation flowchart of another transmission parameter adjustment method according to an embodiment of this application;
FIG. 10 is a schematic structural diagram of a transmission parameter adjustment apparatus corresponding to FIG. 9 according to an embodiment of this application;
FIG. 11 is a schematic structural diagram of a communication device according to an embodiment of this application; and
FIG. 12 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application may be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

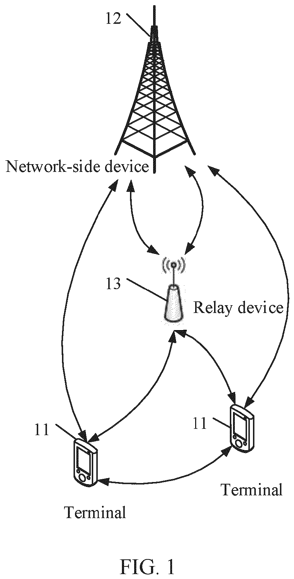

FIG. 1 is a block diagram of a wireless communication system applicable to an embodiment of this application. The wireless communication system includes a terminal 11, a network-side device 12, and a relay device 13. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device, and the access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The relay device 13 may be one of a network controlled repeater (Network controlled repeater, NCR) and a reconfigurable intelligent surface (Reconfigurable Intelligent Surface, RIS), and the reconfigurable intelligent surface may also be referred to as hypersurface, reflective surface, and intelligent reflective surface.

The following specifically describes the transmission parameter adjustment method provided in the embodiments of this application through specific embodiments and application scenarios thereof with reference to the accompanying drawings.

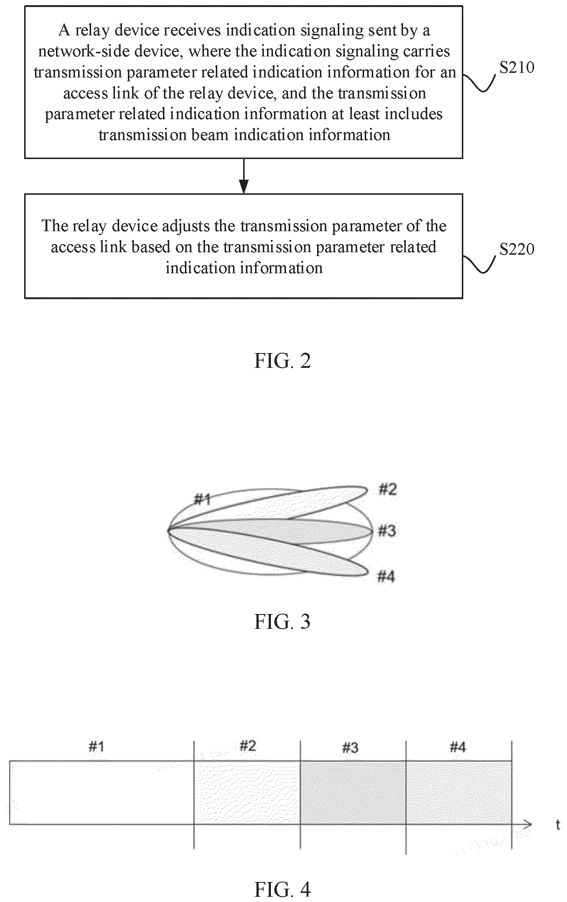

Referring to FIG. 2, FIG. 2 is an implementation flowchart of a transmission parameter adjustment method according to an embodiment of this application, and the method may include the following steps.

S210: A relay device receives indication signaling sent by a network-side device, where the indication signaling carries transmission parameter related indication information for an access link of the relay device, and the transmission parameter related indication information includes transmission beam indication information.

In this embodiment of this application, the relay device may forward a signal sent by the network-side device to a terminal, and may also forward a signal sent by the terminal to the network-side device and amplify the signal.

As described above, a link between the relay device and the terminal may be referred to as an access link. A downlink signal sent by the network-side device to the terminal first arrives at the relay device and then is forwarded to the terminal through the access link of the relay device. Similarly, uplink signals sent by the terminal to the network-side device may first arrive at the relay device through the access link of the relay device and then is forwarded to the network-side device. The network-side device may indicate a transmission parameter of the access link of the relay device according to an actual signal transmission requirement, and sends the indication signaling.

The indication signaling may carry the transmission parameter related indication information for the access link of the relay device, and the transmission parameter related indication information includes the transmission beam indication information. That is, the network-side device indicates to the relay device a transmission beam to be used.

After receiving the indication signaling sent by the network-side device, the relay device may obtain the transmission parameter related indication information including the transmission beam indication information.

S220: The relay device adjusts the transmission parameter of the access link based on the transmission parameter related indication information.

After receiving the indication signaling sent by the network-side device, the relay device may obtain the transmission parameter related indication information carried in the indication signaling for the access link of the relay device, where the transmission parameter related indication information includes the transmission beam indication information. The relay device may adjust the transmission parameter of the access link based on the transmission parameter related indication information. For example, a transmission beam in use is adjusted based on the transmission beam indication information.

According to the method in this embodiment of this application, the indication signaling sent by the network-side device and received by the relay device carries the transmission parameter related indication information for the access link of the relay device, and the transmission parameter related indication information includes the transmission beam indication information. Based on the transmission parameter related indication information, the transmission parameter of the access link is adjusted, so that control and adjustment of the transmission parameter of the access link of the relay device may be implemented through the air interface, performance of the access link of the relay device may be improved, and communication quality may be guaranteed. In addition, system performance and signaling overheads may be balanced effectively by refining the transmission parameter related indication information at the transmission beam level.

In an embodiment of this application, the transmission beam indication information may be determined based on first beam relationship information.

The first beam relationship information may include at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

In this embodiment of this application, the network-side device may obtain the first beam relationship information, and may determine the transmission beam indication information based on the first beam relationship information, and then adds the transmission parameter related indication information including the transmission beam indication information to the indication signaling and sends it to the relay device, so that the relay device can adjust, based on the transmission parameter related indication information, the transmission parameter including the transmission beam of the access link.

The first beam relationship information may include at least one of the following:
(1) Downlink beams with a quasi co-location relation. That is, which downlink beams of the relay device have a quasi co-location relation. As shown in FIG. 3, the network-side device may indicate that a quasi co-location relation is present between beams #1, #2, #3, and #4. Quasi co-location (Quasi-Colocation, QCL) means that if a radio channel attribute of one antenna port may be deduced from a radio channel attribute of another antenna port, the two antenna ports are quasi co-located. The quasi co-location relation represents a relationship between antenna ports in terms of Doppler spread, Doppler frequency shift, delay spread, average delay, space receiver parameter, and the like.
(2) Downlink beams using a same transmit beam or a same spatial domain transmission filter. That is, which downlink beams of the relay device use a same transmit beam or a same spatial domain transmission filter (spatial domain transmission filter).
(3) Uplink beams using a same receive beam or a same spatial domain reception filter. That is, which uplink beams of the relay device use a same receive beam or the same spatial domain reception filter (spatial domain reception filter).
(4) Uplink and downlink beams using a same transmit beam and receive beam or a same spatial domain transmission filter and spatial domain reception filter. That is, which uplink and downlink beams of the relay device use a same transmit beam and receive beam, or which uplink and downlink beams of the relay device use a same spatial domain reception filter and spatial domain transmission filter.

Based on the first beam relationship information, the network-side device may determine a transmission beam to be controlled for use for the relay device, and determine the transmission beam indication information. For example, the transmission beam indication information may include an indication that one of downlink beams with a quasi co-location relation is a transmission beam, or an indication that one of downlink beams using a same transmit beam or a same spatial domain transmission filter is a transmission beam, or an indication that one of uplink beams using a same receive beam or a same spatial domain reception filter is a transmission beam, or an indication that a pair of uplink and downlink beams using a same transmit beam and receive beam or a same spatial domain transmission filter and spatial domain reception filter are transmission beams.

After receiving the indication signaling sent by the network-side device, the relay device may obtain the transmission beam indication information, so that the transmission beam of the access link may be adjusted based on the transmission beam indication information.

As shown in FIG. 4, the relay device may determine a transmission beam corresponding to each time period based on the transmission beam indication information indicated by the network-side device, for example, using beams #1, #2, #3, and #4 in each time period in turn.

Determining the beam indication information based on the first beam relationship information helps control and adjust the transmission beam more finely.

In an embodiment of this application, before the relay device receives the indication signaling sent by the network-side device, the method may further include the following step:
the relay device reports the first beam relationship information to the network-side device.

In this embodiment of this application, before receiving the indication signaling sent by the network-side device, the relay device may report the first beam relationship information to the network-side device, so that the network-side device can accurately obtain the first beam relationship information, and then determine the transmission beam indication information accurately based on the first beam relationship information.

Specifically, when receiving specified beam information of the network-side device, the relay device may determine the first beam relationship information based on the specified beam information and report it to the network-side device.

For example, the network-side device sends the specified beam information to the relay device, and the specified beam information includes information of multiple specified beams, such as a reference signal (Reference Signal, RS) ID, a synchronization signal and PBCH block (Synchronization signal and PBCH block, SSB) index (index), a beam (beam) index, and the like. The relay device determines the first beam relationship information based on the specified beam information and reports it to the network-side device, and the network-side device performs further transmission beam indication accordingly.

In an embodiment of this application, the relay device adjusts the transmission parameter of the access link based on the transmission parameter related indication information, which may include the following step:
the relay device adjusts the transmission parameter of the access link based on the transmission beam indication information and the second beam relationship information; where
the second beam relationship information includes at least one of the following:
   downlink beams with a quasi co-location relation;
   downlink beams using a same transmit beam or a same spatial domain transmission filter;
   uplink beams using a same receive beam or a same spatial domain reception filter; and
   uplink and downlink beams using a same transmit beam and receive beam or a same spatial domain transmission filter and spatial domain reception filter.

In this embodiment of this application, the indication signaling sent by the network-side device and received by the relay device carries the transmission parameter related indication information for the access link of the relay device, and the transmission parameter related indication information includes the transmission beam indication information, that is, a transmission beam that the network-side device indicates the relay device to use.

The relay device may determine the second beam relationship information in advance, and the second beam relationship information may include at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

The second beam relationship information and the first beam relationship information may be the same or different. The first beam relationship information may be beam relationship information for all beams of the access link of the relay device, or beam relationship information for specified beams of the network-side device, and the second beam relationship information may be beam relationship information for all beams of the access link of the relay device or beam relationship information for part of beams of the access link of the relay device.

The relay device may adjust the transmission parameter of the access link based on the transmission beam indication information and the second beam relationship information. For example, if a downlink beam indicated in the transmission beam indication information is beam1, and it is determined based on the second beam relationship information that downlink beams with a quasi co-location relation with beam1 are beam2 and beam3, the downlink beam of the access link may be adjusted to any one of beam1, beam2, and beam3. Alternatively, if it is determined based on the second beam relationship information that a downlink beam using a same transmit beam or a same spatial domain transmission filter as beam1 is beam4, the downlink beam of the access link may be adjusted to either beam1 or beam4. Others are the same as this, and details are not repeated here.

Adjusting the transmission parameter of the access link based on the transmission beam indication information and the second beam relationship information can improve adjustment flexibility of the transmission parameter.

In an embodiment of this application, the second beam relationship information may be determined according to an indication of the network-side device. That is, the network-side device may indicate the second beam relationship information according to a signal transmission requirement, that is, indicating which downlink beams have a quasi co-location relation, indicating which downlink beams use a same transmit beam or a same spatial domain transmission filter, indicating which uplink beams use a same receive beam or a same spatial domain reception filter, and indicating which uplink and downlink beams use a same transmit beam and receive beam or a same spatial domain transmission filter and spatial domain reception filter.

The network-side device may send first indication information to the relay device, and the first indication information is used for determining the second beam relationship information; and the relay device may determine the second beam relationship information based on the first indication information. Alternatively, the network-side device may directly indicate the second beam relationship information to the relay device, and the relay device may directly obtain the second beam relationship information.

The relay device adjusts the transmission parameter of the access link based on the second beam relationship information indicated by the network-side device and the transmission beam indication information sent by the network-side device, so that the adjusted transmission parameter can better meet the signal transmission requirement of the network-side device.

In this embodiment of this application, a quasi-co-location identifier, for example, a transmission configuration indicator (Transmission Configuration Indicator, TCI), may be defined to identify a plurality of beams with a quasi co-location relation. Alternatively, a spatial domain filter identifier may be defined to identify beams with a same spatial domain filter.

Beams in the first beam relationship information and the second beam relationship information may be identified by a quasi-co-location identifier or a spatial domain filter identifier.

In an embodiment of this application, the relay device adjusts the transmission parameter of the access link based on the transmission parameter related indication information, which may include the following step:
the relay device adjusts the transmission parameter of the access link based on the transmission beam indication information and beam setting information; where
the beam setting information may include at least one of the following:
   a phase shift between beams;
   a step of the phase shift between the beams;
   a maximum or minimum value of the step of the phase shift between the beams;
   a range of the phase shift between the beams;
   a panel for implementing the beam;
   the number of panels for implementing the beam;
   an antenna element for implementing the beam; and
   the number of antenna elements for implementing the beam.

In this embodiment of this application, the relay device may determine the beam setting information in advance. After the indication signaling sent by the network-side device is received, the transmission parameter related indication information for the access link of the relay device may be obtained, where the transmission parameter related indication information includes the transmission beam indication information. The relay device may adjust the transmission parameter of the access link based on the transmission beam indication information and the beam setting information.

Specifically, the relay device may determine the transmission beam used for the access link based on the transmission beam indication information, and then can set a transmission beam parameter for the access link in use based on the beam setting information. For example, phase shift related information of the transmission beam is determined based on information such as the phase shift between beams, the step of the phase shift between beams, the maximum or minimum value of the step of the phase shift between beams, and the range of the phase shift between beams. Panel related information of the transmission beam is determined based on information such as the panel for implementing the beam and the number of the panels for implementing the beam. Antenna element related information of the transmission beam is determined based on information such as the antenna element for implementing the beam and the number of antenna elements for implementing the beam. Further, corresponding beam adjustment can be performed for the access link of the relay device based on the phase shift related information of the transmission beam, the panel related information for implementing the transmission beam, and the antenna element related information for implementing the transmission beam.

The relay device adjusts the transmission parameter of the access link based on the transmission beam indication information and the beam setting information, so that the transmission beam may be controlled and adjusted more finely.

In an embodiment of this application, the beam setting information is determined according to an indication of the network-side device.

In this embodiment of this application, the network-side device may determine the beam setting information according to an actual signal transmission requirement, and then indicate the beam setting information to the relay device. The relay device sets and adjusts the transmission beam of the access link based on the beam indication information and the beam setting information, which more complies with the signal transmission requirement of the network-side device.

In an embodiment of this application, the method may further include the following step:
after independently determining the beam setting information, the relay device reports it to the network-side device.

In this embodiment of this application, the relay device can independently determine the beam setting information, and set and adjust the transmission beam of the access link based on the beam indication information and the beam setting information. After determining the beam setting information, the relay device may report the beam setting information to the network-side device, so that the network-side device may obtain related information of the relay device, which helps the network-side device to control the transmission parameter for the access link of the relay device more accurately.

In an embodiment of this application, the transmission parameter related indication information may further include at least one of transmit power indication information, amplification factor indication information, and device on or off indication information.

In this embodiment of this application, the transmission parameter related indication information includes transmission beam indication information, and may also include at least one of transmit power indication information, amplification factor indication information, and device on or off indication information. The relay device may adjust the transmission parameter of the access link based on the transmission parameter related indication information.

Specifically, if the transmission parameter related indication information also includes the transmit power indication information, the relay device may adjust a transmit power of the access link to a transmit power indicated by the transmit power indication information;

If the transmission parameter related indication information also includes the amplification factor indication information, the relay device may adjust an amplification factor of the access link to an amplification factor indicated by the amplification factor indication information;

If the transmission parameter related indication information also includes the device on or off indication information, the relay device may perform a corresponding on or off operation.

The transmission parameter related indication information contains a variety of types of information, which is helpful to comprehensively control and adjust the transmission parameter of the access link of the relay device.

It should be noted that setting of the transmit beam and/or the receive beam of the access link of the relay device can also be coordinated between the network-side device and the relay device.

In an embodiment of this application, the transmission parameter related indication information is associated with a time domain resource, and an indication granularity of the time domain resource is a symbol group.

In this embodiment of this application, the transmission parameter related indication information may be associated with the time domain resource.

It can be understood that if the indication granularity of the time domain resource is too large, scheduling flexibility of the network-side device may be easily limited. For example, if the indication granularity is slot (slot), scheduling flexibility of sub-slot (sub-slot) may be affected, and reference signal sweeping (RS sweeping) for beam training of the access link of the relay device cannot be implemented. However, if the indication granularity of the time domain resource is too small, excessive overheads of the indication signaling may be caused. Therefore, in this embodiment of this application, the indication granularity of the time domain resource is set as a symbol group. The indication granularity using symbol group for the time domain resource is neither too large nor too small, which can reduce indication signaling overheads and balance scheduling flexibility of the network-side device.

In an embodiment of this application, the number of symbols in the symbol group is determined based on a protocol prescription, or based on configuration by the network-side device, or based on an indication of the network-side device.

In this embodiment of this application, the transmission parameter related indication information is associated with the time domain resource, and the indication granularity of the time domain resource is symbol group, each symbol group includes a plurality of symbols, and the specific number of symbols may be specified by the protocol, or may be configured by the network-side device according to an actual signal transmission requirement, or may be indicated by the network-side device.

For example, the number of symbols in the symbol group is 1 or N, N is the total number of symbols in the time domain unit, or N is a number between 1 and the total number of symbols in the time domain unit.

Determining the number of symbols in the symbol group can improve the flexibility of adjusting the transmission parameter of the access link.

In an embodiment of this application, the symbol group is obtained by dividing a time domain unit.

In this embodiment of this application, the time domain unit may be preset, and the symbol group may be obtained by dividing the time domain unit. This improves scheduling flexibility of the network-side device and flexibility of adjusting the transmission parameter of the access link by the relay device.

In an embodiment of this application, the time domain unit may include one of a slot, a subframe, a half slot, and a half subframe; or
the time domain unit may include one of an uplink part, a downlink part and a flexible part of a slot; or
the time domain unit may include a time division duplex period; or
the time domain unit may include one of an uplink part, a downlink part, and a flexible part of a time division duplex period; or
the time domain unit may include a time domain unit specified by a protocol or configured by the network-side device.

In this embodiment of this application, the transmission parameter related indication information is associated with the time domain resource, and the indication granularity of the time domain resource is a symbol group, where the symbol group is obtained by dividing a time domain unit. There are many types of time domain units, and different time domain units may be set according to different signal transmission requirements.

Specifically, the time domain unit may include one of a slot, a subframe, a half slot, and a half subframe, that is, each slot, or each subframe, or each half slot, or each half subframe may be used as one time domain unit.

The time domain unit may include one of an uplink (UL) part, a downlink (DL) part, and a flexible (Flexible) part of a slot, that is, an uplink part of each slot, or a downlink part of each slot, or a flexible part of each slot may be used as one time domain unit.

The time domain unit may include a time division duplex (Time Division Duplexing, TDD) period, that is, each TDD period may be used as a time domain unit.

The time domain unit may include one of an uplink part, a downlink part and a flexible part of a time division duplex period, that is, an uplink part, a downlink part or a flexible part of each time division duplex period may be used as one time domain unit.

The time domain unit may include the time domain unit specified by the protocol or configured by the network-side device, that is, the time domain unit specified by the protocol or configured by the network-side device may be used as one time domain unit. For example, one time period indicated by the network-side device is used as a time domain unit, or one frame (frame) indicated by the network-side device is used as a time domain unit, or a synchronization signal and PBCH block period indicated by the network-side device is used as a time domain unit.

The time domain unit is determined in various manners, which improves scheduling flexibility of the network-side device and flexibility of adjusting the transmission parameter of the access link by the relay device.

In an embodiment of this application, the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

In this embodiment of this application, the number of symbols may be preset. Based on the set number of symbols, the symbols in the time domain unit may be grouped in a time-order sequence in the time domain unit, to obtain multiple symbol groups. Alternatively, based on the set number of symbols, the symbols in the time domain unit may be grouped in a reversed time-order sequence in the time domain unit to obtain multiple symbol groups.

It can be understood that the total number of symbols in the time domain unit is different, depending on different determining manners of the time domain unit. After grouping of the symbols in the time domain unit based on the set number of symbols, there may be remaining symbols. For example, the number of symbols in the time domain unit is 14, and the set number of symbols is 4. After grouping of the symbols in the time domain unit based on the set number of symbols, there may be remaining symbols, and the number of remaining symbols is 14-4*3=2.

In this embodiment of this application, if there are remaining symbols after grouping, the remaining symbols may be divided into one symbol group. In the above example, two remaining symbols may be divided into one symbol group, that is, the time domain unit is divided into four symbol groups, of which three symbol groups each include four symbols and the other symbol group includes two symbols.

If there are remaining symbols after grouping, the remaining symbols may alternatively not belong to any one symbol group. In the above example, the time domain unit is divided into three symbol groups, and there are two remaining symbols, where the two remaining symbols do not belong to any one symbol group.

If there are remaining symbols after grouping, the remaining symbols may alternatively be divided into a nearest symbol group. The nearest symbol group may be a nearest symbol group before the remaining symbols or a nearest symbol group after the remaining symbols. In the above example, after the symbols in the time domain unit are grouped based on the set number of symbols, there are two remaining symbols. The two remaining symbols may be divided into the nearest symbol group, that is, the time domain unit is divided into three symbol groups, of which two symbol groups each include four symbols and the other symbol group includes 4+2=6 symbols.

According to the above operations, the time domain unit is divided to obtain symbol groups, and then the transmission parameter related indication information may be indicated using the symbol group as the indication granularity, thus improving scheduling flexibility of the network-side device and flexibility of adjusting the transmission parameter by the relay device.

In an embodiment of this application, a pattern of the symbol group is determined based on a protocol prescription, or based on configuration by the network-side device, or based on an indication of the network-side device.

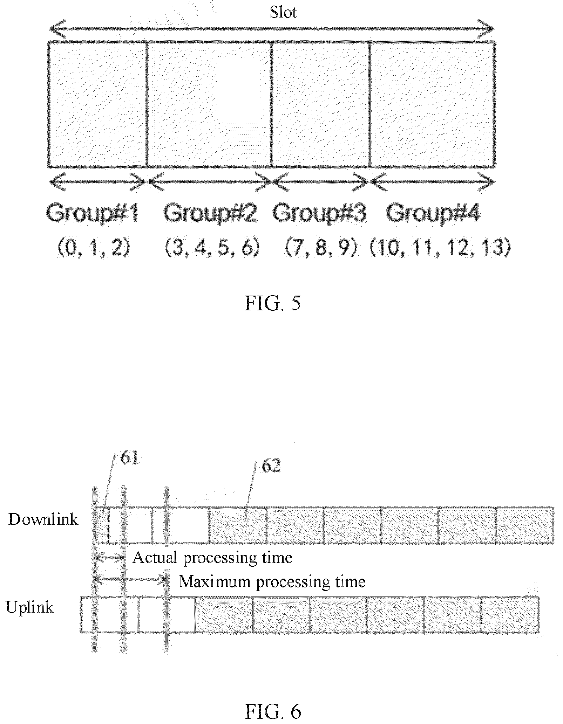

In this embodiment of this application, the pattern (pattern) of the symbol group may be determined based on the protocol prescription, or based on the configuration by the network-side device, or based on the indication of the network-side device. For example, as shown in FIG. 5, in a slot, four symbol groups, Group#1, Group#2, Group#3, and Group#4, are obtained, and the pattern of the symbol group may be {(0,1,2), (3,4,5,6), (7,8,9), (10,11,12,13)}. Certainly, the pattern of the symbol group may alternatively be {(0,1,2), (3,4), (5,6), (7,8,9), (10,11), (12, 13)} or other patterns.

The pattern of the symbol group may be flexibly adjusted, which helps adapt to different scheduling requirements.

In an embodiment of this application, an applicable time period of the transmission parameter related indication information using the symbol group as the indication granularity is determined based on a protocol prescription, or based on configuration by the network-side device, or based on an indication of the network-side device.

In this embodiment of this application, the transmission parameter related indication information is associated with a time domain resource, and the indication granularity of the time domain resource is a symbol group. The transmission parameter related indication information using the symbol group as the indication granularity may have a corresponding applicable time period, that is, the indication granularity of the transmission parameter related indication information within its corresponding applicable time period is a symbol group. An indication granularity of the time domain resource in other time periods may be a granularity other than the symbol group, such as a slot granularity or a subframe granularity.

The applicable time period may be specified by a protocol, configured by the network-side device, or indicated by the network-side device, which helps to improve flexibility of the indication signaling.

In an embodiment of this application, each time domain unit corresponds to its own transmission parameter related indication information in the applicable time period, or corresponding symbol groups of different time domain units in the applicable time period correspond to same transmission parameter related indication information.

In this embodiment of this application, the indication granularity of the transmission parameter related indication information is a symbol group within the applicable time period of the transmission parameter related indication information using the symbol group as the indication granularity.

Multiple time domain units may be included in the applicable time period. In a possible embodiment, each time domain unit in the applicable time period may correspond to its own transmission parameter related indication information, that is, transmission parameter related indication information corresponding to each time domain unit is independently indicated in the applicable time period. The transmission parameter related indication information corresponding to each time domain unit in the applicable time period may be the same or different. For example, the applicable time period includes time domain unit A, time domain unit B, and time domain unit C. Transmission parameter related indication information corresponding to time domain unit A is information A, transmission parameter related indication information corresponding to time domain unit B is information B, and transmission parameter related indication information corresponding to time domain unit C is information C. Information A, information B, and information C are different; or information A is the same as information B but different from information C.

In the applicable time period, each time domain unit corresponds to its own transmission parameter related indication information, which can further improve scheduling flexibility of the network-side device and flexibility of adjusting the transmission parameter by the relay device.

In another possible embodiment, transmission parameter related indication information corresponding to corresponding symbol groups of different time domain units in the applicable time period is the same. Each time domain unit may include multiple symbol groups in the applicable time period, and each time domain unit includes symbol groups obtained by dividing a corresponding time domain unit, and symbol groups in a same position in different time domain units may be considered as corresponding symbol groups. For example, time domain unit A includes symbol group A1, symbol group A2, and symbol group A3, while time domain unit B includes symbol group B1, symbol group B2, and symbol group B3. Symbol group A1 and symbol group B1 may be considered as corresponding symbol groups, symbol group A2 and symbol group B2 as corresponding symbol groups, and symbol group A3 and symbol group B3 as corresponding symbol groups. Transmission parameter related indication information corresponding to corresponding symbol groups of different time domain units in the applicable time period is the same. That is, in the applicable time period, the corresponding symbol groups of different time domain units are indicated by same transmission parameter related indication information. This can simplify the indication signaling.

In an embodiment of this application, the transmission parameter related indication information is associated with a time domain resource, and the transmission parameter related indication information includes information indicating a transmission parameter on a periodic time domain resource; and the receiving, by a relay device, indication signaling sent by a network-side device includes:
periodically receiving, by the relay device at the beginning of a set time domain resource period or in a time domain resource period before the set time domain resource period, indication signaling sent by the network-side device; where
the set time domain resource period is a time domain resource period corresponding to the transmission parameter related indication information.

In this embodiment of this application, the transmission parameter related indication information is associated with a time domain resource, and the transmission parameter related indication information may include information indicating a transmission parameter on a periodic time domain resource. A transmission parameter in each time domain resource period are indicated in advance by the indication signaling, such as at the beginning of the current time domain resource period or in a time domain resource period before the current time domain resource period.

Correspondingly, the relay device may receive the indication signaling sent by the network-side device at the beginning of the set time domain resource period or in a time domain resource period before the set time domain resource period, so as to adjust the transmission parameter of the set time domain resource period based on the indication signaling.

The time domain resource period is set to be a time domain resource period corresponding to the transmission parameter related indication information, and may be one or more.

The relay device receives the indication signaling sent by the network-side device at the beginning of the set time domain resource period or in the time domain resource period before the set time domain resource period, so that the adjusted transmission parameter may be used in the set time domain resource period to improve the signal transmission quality.

In an embodiment of this application, the method may further include the following step:
for any one time domain resource period, if there is no valid transmission parameter related indication information in the current time domain resource period, performing, by the relay device, device shutdown in the current time domain resource period, or adjusting the transmission parameter of the access link to a preset transmission parameter, or adjusting the transmission parameter of the access link based on recently received transmission parameter related indication information.

In this embodiment of this application, the transmission parameter related indication information is associated with a time domain resource, and the transmission parameter related indication information includes information indicating a transmission parameter on a periodic time domain resource.

For any time domain resource period, if there is no valid transmission parameter related indication information in the current time domain resource period, the relay device may consider that the network-side device has not transmitted the transmission parameter related indication information in the current time domain resource period, and may perform a device off operation in the current time domain resource period to save device resources. The current time domain resource period is a time domain resource period for the current operation, which is similar for the following.

Alternatively, the transmission parameter of the access link may be adjusted to a preset transmission parameter. The preset transmission parameter is set in advance, and may be a transmission parameter meeting most signal transmission requirements. When there is no valid transmission parameter related indication information in the current time domain resource period, the preset transmission parameter may be used. This avoids invalid transmission parameters of the access link from affecting the signal transmission.

Alternatively, the transmission parameter of the access link may be adjusted based on recently received transmission parameter related indication information. The recently received transmission parameter related indication information may be received at any one time domain resource period before the current time domain resource period. The transmission parameter of the access link may be adjusted based on the recently received transmission parameter related indication information, so as to avoid invalid transmission parameters of the access link from affecting the signal transmission.

In an embodiment of this application, the transmission parameter related indication information is associated with a specific transmission. The network-side device may send the transmission parameter related indication information to the relay device through the specific transmission. Such indication manner can control more flexibly and accurately, according to specific scheduling information, a transmission parameter indicated each time to the relay device.

In an embodiment of this application, the specific transmission includes synchronization signal and PBCH block transmission, and the transmission beam indication information includes: an indicated synchronization signal and PBCH block occasion or resource, and a synchronization signal and PBCH block identifier or beam identifier corresponding to the synchronization signal and PBCH block occasion or resource; or
the specific transmission includes channel state information reference signal or sounding reference signal transmission, and the transmission beam indication information includes: an indicated channel state information reference signal or sounding reference signal occasion or resource, and a reference signal identifier or beam identifier corresponding to the channel state information reference signal or sounding reference signal occasion or resource.

In this embodiment of this application, the transmission parameter related indication information is associated with a specific transmission, and the specific transmission may include synchronization signal and PBCH block transmission, and the transmission beam indication information included in the transmission parameter related indication information may include an indicated synchronization signal and PBCH block occasion or resource (SSB occasion/resource), and a synchronization signal and PBCH block identifier or beam identifier corresponding to the synchronization signal and PBCH block occasion or resource. The synchronization signal and PBCH block identifier may be a synchronization signal and PBCH block index (SSB index), and the beam identifier may be a beam index (beam index), or other logical ID for identifying the beam.

Alternatively, the specific transmission may include channel state information reference signal (Channel State Information-Reference Signal, CSI-RS) or sounding reference signal (Sounding Reference Signal, SRS) transmission, and the transmission beam indication information may include an indicated channel state information reference signal or sounding reference signal occasion or resource, and a reference signal identifier or beam identifier corresponding to the channel state information reference signal or sounding reference signal occasion or resource. The reference signal identifier may be a reference signal ID (RS ID), and the beam identifier may be a beam index, or other logical ID for identifying the beam.

The transmission beam indication information is associated with a specific transmission, which helps to indicate the transmission beam more flexibly and accurately.

In an embodiment of this application, the method may further include the following step:
for any one time domain resource, if there is a conflict between multiple pieces of transmission parameter related indication information on the current time domain resource, performing, by the relay device, at least one of the following:
determining that transmission parameter related indication information associated with a specific transmission preferentially takes effect;
if an indication granularity is different for time domain resources of the multiple pieces of transmission parameter related indication information, determining that transmission parameter related indication information with a smallest indication granularity preferentially takes effect;
if the multiple pieces of transmission parameter related indication information carry priority information, determining that transmission parameter related indication information with a highest priority preferentially takes effect;
determining that latest received transmission parameter related indication information preferentially takes effect; and
determining that dynamic transmission parameter related indication information preferentially takes effect than semi-static transmission parameter related indication information.

In this embodiment of this application, the indication signaling sent by the network-side device and received by the relay device carries the transmission parameter related indication information for the access link of the relay device, and the transmission parameter of the access link may be adjusted based on the transmission parameter related indication information. The transmission parameter related indication information may be associated with a time domain resource. For any one time domain resource, if there are multiple pieces of transmission parameter related indication information on the current time domain resource, there may be a conflict between the multiple pieces of transmission parameter related indication information. In this case, which transmission parameter related indication information preferentially takes effect may be determined in at least one of the following manners, so as to adjust the transmission parameter of the access link based on the transmission parameter related indication information that preferentially takes effect:
(1) Determining that transmission parameter related indication information associated with a specific transmission preferentially takes effect. It may be considered that transmission parameter related indication information associated with a specific transmission has a higher priority, such as transmission parameter related indication information transmitted by a channel state information reference signal CSI-RS, transmission parameter related indication information transmitted by a synchronization signal and PBCH block SSB, and transmission parameter related indication information transmitted by a physical random access channel (Physical Random Access Channel, PRACH).
(2) If an indication granularity is different for time domain resources of the multiple pieces of transmission parameter related indication information, determining that transmission parameter related indication information with a smallest indication granularity preferentially takes effect. It may be considered that transmission parameter related indication information with a smaller indication granularity has priority over the transmission parameter related indication information with a larger indication granularity in a case that there are multiple indication granularities in time domain. For example, transmission parameter related indication information at the symbol (symbol) level preferentially takes effect over transmission parameter related indication information at the slot (slot) level.
(3) If the multiple pieces of transmission parameter related indication information carry priority information, determining that transmission parameter related indication information with a highest priority preferentially takes effect. That is, the network-side device may configure or specify a priority of transmission parameter related indication information sent at a different moment, and transmission parameter related indication information with a higher priority preferentially takes effect over transmission parameter related indication information with a lower priority.
(4) Determining that latest received transmission parameter related indication information preferentially takes effect. That is, for multiple pieces of transmission parameter related indication information with an indication conflict, it may be considered that newly received transmission parameter related indication information has the highest priority, and the newly received transmission parameter related indication information may override previously received transmission parameter related indication information. That is, transmission parameter related indication information finally sent by the network-side device overrides (override) transmission parameter related indication information previously sent by the network-side device.
(5) Determining that dynamic transmission parameter related indication information preferentially takes effect than semi-static transmission parameter related indication information. That is, dynamic information preferentially takes effect over semi-static information. For example, transmission parameter related indication information indicated by downlink control information (Downlink Control Information, DCI) preferentially takes effect over transmission parameter related indication information indicated by MAC control element (MAC CE)/radio resource control (Radio Resource Control, RRC)/operation administration and maintenance (Operation Administration and Maintenance, OAM); and the transmission parameter related indication information indicated by MAC CE preferentially takes effect over the transmission parameter related indication information indicated by RRC/OAM.

The embodiments of this application allow coexistence of multiple indication modes, which can effectively balance signaling overheads and scheduling flexibility of the network-side device.

In an embodiment of this application, the transmission parameter related indication information includes transmission parameter specific indication information and transmission parameter activation or deactivation indication information. The transmission parameter specific indication information is used to directly indicate a transmission parameter, and the transmission parameter activation or deactivation indication information is used to indicate whether a corresponding transmission parameter is valid, so as to avoid conflicting transmission parameter indications or unnecessary transmission parameter indications.

For example, beam "deactivation" indication information is defined, and is used to deactivate a beam indication at a specific moment to avoid conflicting beam indications or unnecessary beam indications.

In an embodiment of this application, after the receiving, by a relay device, indication signaling sent by a network-side device and before the adjusting, by the relay device, a transmission parameter of the access link based on the transmission parameter related indication information, the following is further included:
determining, by the relay device, a validation time of the transmission parameter related indication information; and
the adjusting, by the relay device, a transmission parameter of the access link based on the transmission parameter related indication information includes:
   in a case that the validation time is reached, adjusting, by the relay device, the transmission parameter of the access link based on the transmission parameter related indication information.

In this embodiment of this application, the network-side device may configure or indicate the validation time of the transmission parameter related indication information, and the validation time is used to indicate when the corresponding transmission parameter related indication information is to be used for transmission parameter adjustment. After receiving the indication signaling sent by the network-side device, the relay device can first determine the validation time of the transmission parameter related indication information carried in the indication signaling. In a case that the validation time is reached, the transmission parameter of the access link is adjusted based on the transmission parameter related indication information, so that the adjustment of the transmission parameter more complies with an actual signal transmission requirement.

In an embodiment of this application, the determining, by the relay device, a validation time of the transmission parameter related indication information may include the following step:
determining, by the relay device, the validation time of the transmission parameter related indication information based on at least one of the following:
validation time indication information of the network-side device;
the n1-th time unit after a transmission moment of the indication signaling, where n1 is a positive integer; and
the n2-th time unit after a hybrid automatic repeat request feedback moment corresponding to transmission of the indication signaling, where n2 is a positive integer.

In this embodiment of this application, the relay device may determine the validation time of the transmission parameter related indication information based on at least one of the following:
(1) Validation time indication information of the network-side device. That is, the validation time of the transmission parameter related indication information is determined based on the validation time indication information of the network-side device.

The validation time indication information may be offset (offset) information between the validation time and an indication signaling sending moment/reference moment, or may be validation duration (duration) information, or may be validation slot/symbol/symbol group bitmap (bitmap) information, or the like.

The network-side device may obtain a preset first duration, and the validation time needs to be behind the preset first duration after transmission of the indication signaling, for example, being behind the preset first duration from starting or ending of a physical channel that sends the indication signaling.

The preset first duration includes a time required for demodulating the indication signaling and completing transmission parameter adjustment by the relay device. The preset first duration may be reported by the relay device to the network-side device, or may be specified by the protocol.

(2) The n1-th time unit after a transmission moment of the indication signaling, where n1 is a positive integer. That is, the transmission parameter related indication information takes effect from the n1-th time unit after the transmission moment of the indication signaling. The transmission moment of the indication signaling may be an indication signaling sending moment or an indication signaling receiving moment. The time unit may be slot, symbol, millisecond, or the like.

An interval between the transmission moment of the indication signaling and the n1-th time unit is greater than a preset second duration. For example, the n1-th time unit is the 1st time unit or the x-th time unit after the indication signaling sending moment plus a preset second duration, and x>1. The preset second duration includes a time required for demodulating the indication signaling and completing transmission parameter adjustment by the relay device. The preset second duration may be specified by the protocol or configured by the network-side device, or a value dynamically indicated by the network-side device.

For example, as shown in FIG. 6, a downlink physical control channel (Physical Downlink Control Channel, PDCCH) is used as indication signaling, and the preset second duration is an upper limit of the PDCCH processing time, that is, a maximum processing time (max processing time). An actual processing time is less than the maximum processing time, and the validation time of the transmission parameter related indication information is the 1st slot after a PDCCH receiving moment plus the upper limit of the PDCCH processing time, where a padding part 61 represents the indication signaling (indication signaling) and a padding part 62 represents the validation time (effective time).

(3) The n2-th time unit after a hybrid automatic repeat request (Hybrid Auto Repeat Request, HARQ) feedback moment corresponding to transmission of the indication signaling, where n2 is a positive integer. That is, the transmission parameter related indication information takes effect from the n2-th time unit after the hybrid automatic repeat request feedback moment corresponding to signaling transmission. The time unit may be slot, symbol, millisecond, or the like.

An interval between the hybrid automatic repeat request feedback moment and the n2-th time unit is greater than a preset interval duration. For example, the n2-th time unit is the 1st or x-th time unit after the HARQ feedback moment plus the preset interval duration, and x>1. The preset interval duration may be specified by the protocol, configured by the network-side device, or dynamically indicated by the network-side device. The preset interval duration includes a duration for demodulation of feedback signaling by the network-side device.

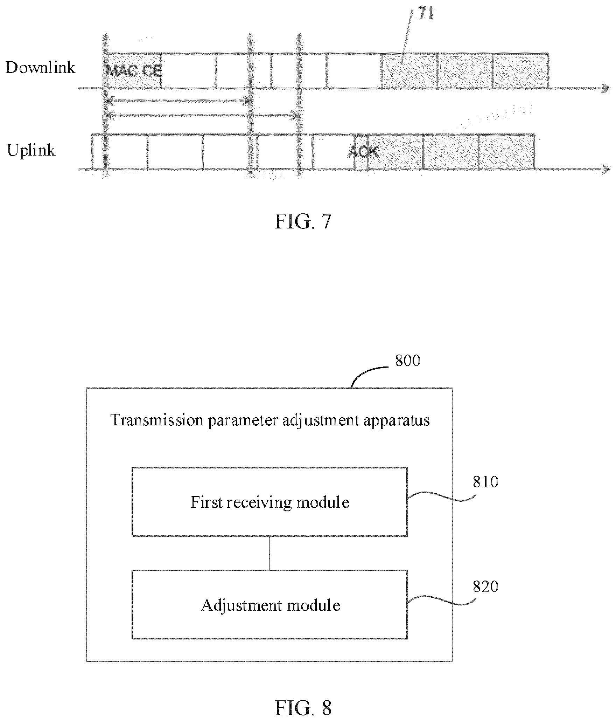

For example, as shown in FIG. 7, MAC CE is used as the indication signaling, and at HARQ feedback moment corresponding to the MAC CE, if the feedback is ACK, the transmission parameter related indication information takes effect in a next slot after the HARQ feedback, for example, a padding part 71.

For example, DCI is used as the indication signaling, and at HARQ feedback moment corresponding to the DCI (for example, a MAC CE is used for HARQ feedback), if the feedback is ACK, the transmission parameter related indication information takes effect in the x-th slot after the HARQ feedback, so as to ensure that the network-side device has enough time to demodulate the MAC CE.

In an embodiment of this application, the validation time indication information may include:
first validation duration information, where the first validation duration information is determined based on an expected duration of the relay device from an indication signaling receiving moment to a validation moment of the transmission parameter related indication information;
   and/or
second validation duration information, where the second validation duration information is determined based on a duration selected by the relay device from a candidate duration list or a candidate duration range.

In this embodiment of this application, the relay device may determine the validation time of the transmission parameter related indication information based on the validation time indication information of the network-side device.

The validation time indication information may include the first validation duration information. The first validation duration information may be determined by the network-side device based on the expected duration of the relay device from the indication signaling receiving moment to the validation moment of the transmission parameter related indication information. That is, the relay device may report to the network-side device an expected duration required from the indication signaling receiving moment, such as a starting/ending moment of a PDCCH RX duration to validation of the transmission parameter related indication information. After receiving the above information, the network-side device may configure the corresponding first validation duration information to the relay device.

The expected duration may include:
a required duration from the indication signaling receiving moment to validation of a new transmission parameter, which may be a minimum required duration; or
a required duration from the indication signaling receiving moment to enabling of uplink and downlink forwarding, which may be a minimum required duration; or
a required duration from the indication signaling receiving moment to a moment reaching a forwarding power or amplification factor, which may be a minimum duration.

The first validation duration information may be reported/configured through a MAC CE, or may be reported/configured by using an F1/RRC message.

The validation time indication information may include the second validation duration information. The network-side device may first configure a candidate duration list or a candidate duration range, and then send the candidate duration list or the candidate duration range to the relay device; and the relay device selects an appropriate duration from the candidate duration list or the candidate duration range and returns it to the network-side device; and the network-side device determines the second validation duration information accordingly.

For example, the network-side device may configure a candidate duration list or a candidate duration range by using a first message, such as an F1/RRC message, and then indicate a required duration for validation of the new parameter by using a second message, for example, using a serial number carried by MAC CE/PDCCH, and the relay device selects one duration from the candidate duration list or the candidate duration range.

Based on the first validation duration information and/or the second validation duration information included in the validation time indication information, the validation time of the transmission parameter related indication information may be determined more accurately.

It should be noted that the required duration from the indication signaling receiving moment to validation of the new transmission parameter may be measured by using a time unit of slot/symbol, and a length of the slot/symbol used for measurement is determined by reference to a SCS, where the reference SCS is indicated by the network-side device in an F1/RRC message.

In an embodiment of this application, a transmission resource associated with the indication signaling may be periodic or quasi-periodic, and the quasi-periodic transmission resource satisfies the following conditions:
if the indication signaling is a physical downlink control channel, a search space (Search space) of the physical downlink control channel is configured periodically; or
if the indication signaling is higher-layer signaling, a search space of a physical downlink control channel for scheduling transmission of a corresponding physical downlink shared channel is periodically configured.

Quasi-periodicity may also be referred to as approximate periodicity. In a quasi-periodic transmission resource, if a physical downlink control channel (PDCCH) is used as the indication signaling, a search space (Search space) of the physical downlink control channel is periodically configured, or if higher-layer signaling such as MAC CE/RRC/F1 is used as the indication signaling, a search space of a physical downlink control channel (PDCCH Search space) for scheduling transmission of a physical downlink shared channel (Physical Downlink Shared Channel, PDSCH) is configured periodically.

The embodiments of this application clarifies a transmission mode and time sequence relationship of the indication signaling, which helps the network-side device and the relay device to reach a unified understanding, so as to effectively avoid confusion or invalidation of the indication signaling.

For the transmission parameter adjustment method provided in this embodiment of this application, the execution subject may be a transmission parameter adjustment apparatus. In the embodiments of this application, the transmission parameter adjustment apparatus provided in the embodiments of this application is described by using the transmission parameter adjustment method being executed by the transmission parameter adjustment apparatus as an example.

As shown in FIG. 8, the transmission parameter adjustment apparatus 800 includes the following modules:
a first receiving module 810, configured to receive indication signaling sent by a network-side device, where the indication signaling carries transmission parameter related indication information for an access link of the relay device, and the transmission parameter related indication information includes transmission beam indication information; and
an adjustment module 820, configured to adjust a transmission parameter of the access link based on the transmission parameter related indication information.

According to the apparatus in this embodiment of this application, the indication signaling sent by the network-side device and received by the relay device carries the transmission parameter related indication information for the access link of the relay device, and the transmission parameter related indication information includes the transmission beam indication information. Based on the transmission parameter related indication information, the transmission parameter of the access link is adjusted, so that control and adjustment of the transmission parameter of the access link of the relay device can be implemented through the air interface, performance of the access link of the relay device can be improved, and communication quality can be guaranteed. In addition, system performance and signaling overheads can be balanced effectively by refining the transmission parameter related indication information at the transmission beam level.

In a specific embodiment of this application, the transmission beam indication information is determined based on first beam relationship information.

The first beam relationship information includes at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

In a specific embodiment of this application, the transmission parameter adjustment apparatus 800 further includes a first reporting module, configured to:
before the indication signaling sent by the network-side device is received, report the first beam relationship information to the network-side device.

In a specific embodiment of this application, the adjustment module 820 is configured to:
the relay device adjusts the transmission parameter of the access link based on the transmission beam indication information and the second beam relationship information; where
the second beam relationship information includes at least one of the following:
   downlink beams with a quasi co-location relation;
   downlink beams using a same transmit beam or a same spatial domain transmission filter;
   uplink beams using a same receive beam or a same spatial domain reception filter; and
   uplink and downlink beams using a same transmit beam and receive beam or a same spatial domain transmission filter and spatial domain reception filter.

In a specific embodiment of this application, the second beam relationship information is determined according to an indication of the network-side device.

In a specific embodiment of this application, the adjustment module 820 is configured to:
the relay device adjusts the transmission parameter of the access link based on the transmission beam indication information and beam setting information; where
the beam setting information includes at least one of the following:
   a phase shift between beams; a step of the phase shift between beams; a maximum or minimum value of the step of the phase shift between beams; a range of the phase shift between beams; a panel for implementing the beam; the number of the panels for implementing the beam; an antenna element for implementing the beam; and the number of antenna elements for implementing the beam.

In a specific embodiment of this application, the beam setting information is determined according to an indication of the network-side device.

In a specific embodiment of this application, a second reporting module is further included, and is configured to:
after the beam setting information is independently determined, report the beam setting information to the network-side device.

In a specific embodiment of this application, the transmission parameter related indication information further includes at least one of transmit power indication information, amplification factor indication information, and device on or off indication information.

In a specific embodiment of this application, the transmission parameter related indication information is associated with a time domain resource, and an indication granularity of the time domain resource is a symbol group.

In a specific embodiment of this application, the number of symbols in the symbol group is determined based on a protocol prescription, or based on configuration by the network-side device, or based on an indication of the network-side device.

In a specific embodiment of this application, the symbol group is obtained by dividing a time domain unit.

In a specific embodiment of this application, the time domain unit includes one of a slot, a subframe, a half slot, and a half subframe; or, the time domain unit includes one of an uplink part, a downlink part, and a flexible part of a slot; or, the time domain unit includes a time division duplex period; or, the time domain unit includes one of an uplink part, a downlink part, and a flexible part of the time division duplex period; or, the time domain unit includes the time domain unit specified by the protocol or configured by the network-side device.

In a specific embodiment of this application, the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

In a specific embodiment of this application, a pattern of the symbol group is determined based on a protocol prescription, or based on configuration by the network-side device, or based on an indication of the network-side device.

In a specific embodiment of this application, an applicable time period of the transmission parameter related indication information using the symbol group as the indication granularity is determined based on a protocol prescription, or based on configuration by the network-side device, or based on an indication of the network-side device.

In a specific embodiment of this application, each time domain unit corresponds to its own transmission parameter related indication information in the applicable time period, or corresponding symbol groups of different time domain units in the applicable time period correspond to same transmission parameter related indication information.

In a specific embodiment of this application, the transmission parameter related indication information is associated with a time domain resource, and the transmission parameter related indication information includes information indicating a transmission parameter on a periodic time domain resource. The first receiving module 810 is configured to:
periodically receive, at the beginning of a set time domain resource period or in a time domain resource period before the set time domain resource period, indication signaling sent by the network-side device; where
the set time domain resource period is a time domain resource period corresponding to the transmission parameter related indication information.

In a specific embodiment of this application, the adjustment module 820 is further configured to:
for any one time domain resource period, if there is no valid transmission parameter related indication information in the current time domain resource period, perform device shutdown in the current time domain resource period, or adjust the transmission parameter of the access link to a preset transmission parameter, or adjust the transmission parameter of the access link based on recently received transmission parameter related indication information.

In a specific embodiment of this application, the transmission parameter related indication information is associated with a specific transmission.

In a specific embodiment of this application, the specific transmission includes synchronization signal and PBCH block transmission, and the transmission beam indication information includes: an indicated synchronization signal and PBCH block occasion or resource, and a synchronization signal and PBCH block identifier or beam identifier corresponding to the synchronization signal and PBCH block occasion or resource; or
the specific transmission includes channel state information reference signal transmission or sounding reference signal transmission, and the transmission beam indication information includes: an indicated channel state information reference signal or sounding reference signal occasion or resource, and a reference signal identifier or beam identifier corresponding to the channel state information reference signal or sounding reference signal occasion or resource.

In a specific embodiment of this application, the transmission parameter adjustment apparatus 800 further includes an execution module, configured to:
for any one time domain resource, if there is a conflict between multiple pieces of transmission parameter related indication information on the current time domain resource, performing, by the relay device, at least one of the following:
determining that transmission parameter related indication information associated with a specific transmission preferentially takes effect;
if an indication granularity is different for time domain resources of the multiple pieces of transmission parameter related indication information, determining that transmission parameter related indication information with a smallest indication granularity preferentially takes effect;
if the multiple pieces of transmission parameter related indication information carry priority information, determining that transmission parameter related indication information with a highest priority preferentially takes effect;
determining that latest received transmission parameter related indication information preferentially takes effect; and
determining that dynamic transmission parameter related indication information preferentially takes effect than semi-static transmission parameter related indication information.

In a specific embodiment of this application, the transmission parameter related indication information includes transmission parameter specific indication information, and transmission parameter activation or deactivation indication information.

In a specific embodiment of this application, the transmission parameter adjustment apparatus further includes a first determining module, configured to:
determine a validation time of the transmission parameter related indication information after the indication signaling sent by the network-side device is received and before the transmission parameter of the access link is adjusted based on the transmission parameter related indication information.

The adjustment module 820 is configured to:
in a case that the validation time is reached, adjust the transmission parameter of the access link based on the transmission parameter related indication information.

In a specific embodiment of this application, the first determining module is configured to:
determining, by the relay device, the validation time of the transmission parameter related indication information based on at least one of the following:
validation time indication information of the network-side device;
the n1-th time unit after a transmission moment of the indication signaling, where n1 is a positive integer; and
the n2-th time unit after a hybrid automatic repeat request feedback moment corresponding to transmission of the indication signaling, where n2 is a positive integer.

In a specific embodiment of this application, the validation time indication information includes:
first validation duration information, where the first validation duration information is determined based on an expected duration of the relay device from an indication signaling receiving moment to a validation moment of the transmission parameter related indication information;
   and/or
second validation duration information, where the second validation duration information is determined based on a duration selected by the relay device from a candidate duration list or a candidate duration range.

In a specific embodiment of this application, an interval between the hybrid automatic repeat request feedback moment and the n2-th time unit is greater than a preset interval duration; where
the preset interval duration is specified by a protocol, configured by the network-side device, or dynamically indicated by the network-side device, and the preset interval duration includes a duration for demodulating feedback signaling by the network-side device.

In a specific embodiment of this application, the expected duration includes:
a required duration from the indication signaling receiving moment to validation of a new transmission parameter; or
a required duration from the indication signaling receiving moment to enabling of uplink and downlink forwarding; or
a required duration from the indication signaling receiving moment to a moment reaching a forwarding power or amplification factor.

In a specific embodiment of this application, a transmission resource associated with the indication signaling is periodic or quasi-periodic, and the quasi-periodic transmission resource satisfies the following conditions:
if the indication signaling is a physical downlink control channel, a search space of the physical downlink control channel is configured periodically; or
if the indication signaling is higher-layer signaling, a search space of a physical downlink control channel for scheduling transmission of a corresponding physical downlink shared channel is periodically configured.

The transmission parameter adjustment apparatus provided in this embodiment of this application is capable of implementing the processes implemented in the method embodiments in FIG. 2, with the same technical effects achieved. To avoid repetition, details are not described herein again.

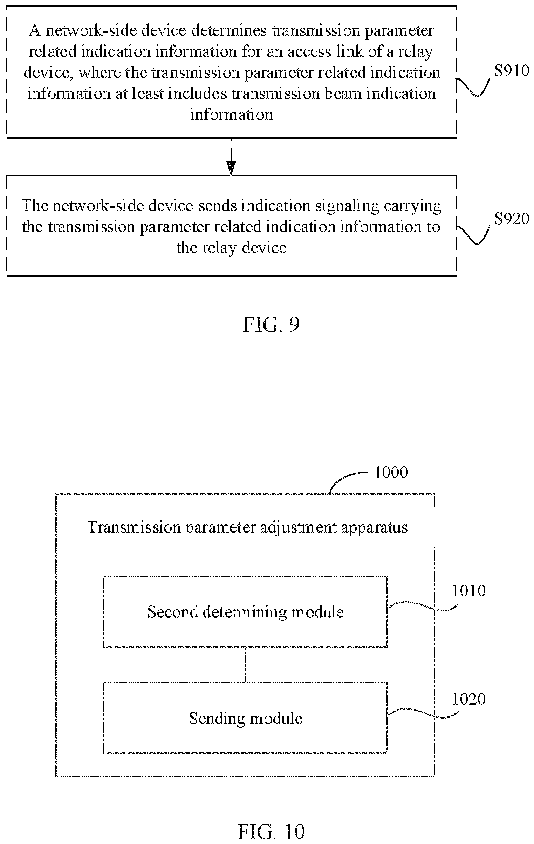

Corresponding to the method embodiment shown in FIG. 2, an embodiment of this application further provides a transmission parameter adjustment method, as shown in FIG. 9, which may include the following steps.

S910: A network-side device determines transmission parameter related indication information for an access link of a relay device, where the transmission parameter related indication information includes transmission beam indication information.

S920: The network-side device sends indication signaling carrying the transmission parameter related indication information to the relay device.

According to the method in this embodiment of this application, the network-side device first determines the transmission parameter related indication information for the access link of the relay device, where the transmission parameter related indication information includes the transmission beam indication information, and sends the indication signaling carrying the transmission parameter related indication information to the relay device, to indicate the relay device to adjust the transmission parameter of the access link based on the transmission parameter related indication information, so that control and adjustment of the transmission parameter of the access link of the relay device can be implemented through the air interface, performance of the access link of the relay device can be improved, and communication quality can be guaranteed. In addition, system performance and signaling overheads can be balanced effectively by refining the transmission parameter related indication information at the transmission beam level.

In a specific embodiment of this application, the transmission beam indication information is determined based on first beam relationship information.

The first beam relationship information includes at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

In a specific embodiment of this application, before the determining, by a network-side device, transmission parameter related indication information for an access link of a relay device, the following is further included:
receiving first beam relationship information reported by the relay device.

In a specific embodiment of this application, the following is further included:
sending, by the network-side device, first indication information to the relay device, where the first indication information is used for determining second beam relationship information; and
the second beam relationship information includes at least one of the following:
   downlink beams with a quasi co-location relation;
   downlink beams using a same transmit beam or a same spatial domain transmission filter;
   uplink beams using a same receive beam or a same spatial domain reception filter; and
   uplink and downlink beams using a same transmit beam and receive beam or a same spatial domain transmission filter and spatial domain reception filter.

That is, the network-side device sends first indication information to the relay device, and the second beam relationship information may be determined according to the first indication information, and the relay device may adjust the transmission parameter of the access link based on the transmission beam indication information and the second beam relationship information.

Alternatively, the network-side device may send the second beam relationship information to the relay device, and the relay device may adjust the transmission parameter of the access link based on the transmission beam indication information and the second beam relationship information.

In a specific embodiment of this application, the following is further included:
sending, by the network-side device, beam setting information to the relay device; where
the beam setting information includes at least one of the following:
   a phase shift between beams;
   a step of the phase shift between the beams;
   a maximum or minimum value of the step of the phase shift between the beams;
   a range of the phase shift between the beams;
   a panel for implementing the beam;
   the number of panels for implementing the beam;
   an antenna element for implementing the beam; and
   the number of antenna elements for implementing the beam.

That is, the network-side device sends beam setting information to the relay device, and the relay device adjusts the transmission parameter of the access link based on the transmission beam indication information and the beam setting information.

In a specific embodiment of this application, the transmission parameter related indication information is associated with a time domain resource, and an indication granularity of the time domain resource is a symbol group.

In a specific embodiment of this application, the number of symbols in the symbol group is determined based on a protocol prescription, or based on configuration by the network-side device, or based on an indication of the network-side device.

In a specific embodiment of this application, the symbol group is obtained by dividing a time domain unit.

In a specific embodiment of this application, the time domain unit includes one of a slot, a subframe, a half slot, and a half subframe; or
the time domain unit includes one of an uplink part, a downlink part and a flexible part of a slot; or
the time domain unit includes a time division duplex period; or
the time domain unit includes one of an uplink part, a downlink part, and a flexible part of a time division duplex period; or
the time domain unit includes a time domain unit specified by a protocol or configured by the network-side device.

In a specific embodiment of this application, the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

In a specific embodiment of this application, a pattern of the symbol group is determined based on a protocol prescription, or based on configuration by the network-side device, or based on an indication of the network-side device.

In a specific embodiment of this application, an applicable time period of the transmission parameter related indication information using the symbol group as the indication granularity is determined based on a protocol prescription, or based on configuration by the network-side device, or based on an indication of the network-side device.

In a specific embodiment of this application, each time domain unit corresponds to its own transmission parameter related indication information in the applicable time period, or corresponding symbol groups of different time domain units in the applicable time period correspond to same transmission parameter related indication information.

In a specific embodiment of this application, the transmission parameter related indication information is associated with a time domain resource, and the transmission parameter related indication information includes information indicating a transmission parameter on a periodic time domain resource; and the sending, by the network-side device, indication signaling carrying the transmission parameter related indication information to the relay device includes:
sending, by the network-side device, the indication signaling carrying the transmission parameter related indication information to the relay device at the beginning of a set time domain resource period or in a time domain resource period before the set time domain resource period; where
the set time domain resource period is a time domain resource period corresponding to the transmission parameter related indication information.

In a specific embodiment of this application, the transmission parameter related indication information is associated with a specific transmission.

In a specific embodiment of this application, the specific transmission includes synchronization signal and PBCH block transmission, and the transmission beam indication information includes: an indicated synchronization signal and PBCH block occasion or resource, and a synchronization signal and PBCH block identifier or beam identifier corresponding to the synchronization signal and PBCH block occasion or resource; or
the specific transmission includes channel state information reference signal transmission or sounding reference signal transmission, and the transmission beam indication information includes: an indicated channel state information reference signal or sounding reference signal occasion or resource, and a reference signal identifier or beam identifier corresponding to the channel state information reference signal or sounding reference signal occasion or resource.

In a specific embodiment of this application, the transmission parameter related indication information includes transmission parameter specific indication information, and transmission parameter activation or deactivation indication information.

In a specific embodiment of this application, after the determining, by a network-side device, transmission parameter related indication information for an access link of a relay device, and before the sending, by the network-side device, indication signaling carrying the transmission parameter related indication information to the relay device, the following is further included:
determining, by the network-side device, a validation time of the transmission parameter related indication information; and
the sending, by the network-side device, indication signaling carrying the transmission parameter related indication information to the relay device includes:
   sending, by the network-side device, the indication signaling carrying the transmission parameter related indication information and the validation time of the transmission parameter related indication information to the relay device.

After the network-side device sends the indication signaling carrying the transmission parameter related indication information and the validation time of the transmission parameter related indication information to the relay device, the relay device may adjust the transmission parameter of the access link based on the transmission parameter related indication information in a case that the validation time is reached.

In a specific embodiment of this application, the determining, by the network-side device, a validation time of the transmission parameter related indication information includes:
determining, by the network-side device, the validation time of the transmission parameter related indication information based on at least one of the following:
validation time indication information of the network-side device;
the n1-th time unit after a transmission moment of the indication signaling, where n1 is a positive integer; and
the n2-th time unit after a hybrid automatic repeat request feedback moment corresponding to transmission of the indication signaling, where n2 is a positive integer.

In a specific embodiment of this application, the validation time indication information includes:
first validation duration information, where the first validation duration information is determined based on an expected duration of the relay device from an indication signaling receiving moment to a validation moment of the transmission parameter related indication information;
   and/or
second validation duration information, where the second validation duration information is determined based on a duration selected by the relay device from a candidate duration list or a candidate duration range, and the candidate duration list or candidate duration range is configured by the network-side device.

In a specific embodiment of this application, an interval between the hybrid automatic repeat request feedback moment and the n2-th time unit is greater than a preset interval duration; where
the preset interval duration is specified by a protocol, configured by the network-side device, or dynamically indicated by the network-side device, and the preset interval duration includes a duration for demodulating feedback signaling by the network-side device.

In a specific embodiment of this application, the expected duration includes:
a required duration from the indication signaling receiving moment to validation of a new transmission parameter; or
a required duration from the indication signaling receiving moment to enabling of uplink and downlink forwarding; or
a required duration from the indication signaling receiving moment to a moment reaching a forwarding power or amplification factor.

In a specific embodiment of this application, a transmission resource associated with the indication signaling is periodic or quasi-periodic, and the quasi-periodic transmission resource satisfies the following conditions:
if the indication signaling is a physical downlink control channel, a search space of the physical downlink control channel is configured periodically; or
if the indication signaling is higher-layer signaling, a search space of a physical downlink control channel for scheduling transmission of a corresponding physical downlink shared channel is periodically configured.

For the specific implementation of this embodiment of this application, refer to the description of the embodiment shown in FIG. 2, with the same technical effects achieved. To avoid repetition, details are not repeated herein.

For the transmission parameter adjustment method provided in this embodiment of this application, the execution subject may be a transmission parameter adjustment apparatus. In the embodiments of this application, the transmission parameter adjustment apparatus provided in the embodiments of this application is described by using the transmission parameter adjustment method being executed by the transmission parameter adjustment apparatus as an example.

As shown in FIG. 10, the transmission parameter adjustment apparatus 1000 includes the following modules:
a second determining module 1010, configured to determine transmission parameter related indication information for an access link of a relay device, where the transmission parameter related indication information includes transmission beam indication information; and
a sending module 1020, configured to send indication signaling carrying the transmission parameter related indication information to the relay device.

The apparatus in this embodiment of this application first determines the transmission parameter related indication information for the access link of the relay device, where the transmission parameter related indication information includes the transmission beam indication information, and sends the indication signaling carrying the transmission parameter related indication information to the relay device, to indicate the relay device to adjust the transmission parameter of the access link based on the transmission parameter related indication information, so that control and adjustment of the transmission parameter of the access link of the relay device can be implemented through the air interface, performance of the access link of the relay device can be improved, and communication quality can be guaranteed. In addition, system performance and signaling overheads can be balanced effectively by refining the transmission parameter related indication information at the transmission beam level.

In a specific embodiment of this application, the transmission beam indication information is determined based on first beam relationship information.

The first beam relationship information includes at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

In a specific embodiment of this application, a second receiving module is further included, and is configured to:
before the transmission parameter related indication information for the access link of the relay device is determined, receiving first beam relationship information reported by the relay device.

In a specific embodiment of this application, the sending module 1020 is further configured to:
sending, by the network-side device, first indication information to the relay device, where the first indication information is used for determining second beam relationship information; and
the second beam relationship information includes at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

In a specific embodiment of this application, the sending module 1020 is further configured to:
send, for the network-side device, beam setting information to the relay device; where the beam setting information includes at least one of the following:
a phase shift between beams;
a step of the phase shift between the beams;
a maximum or minimum value of the step of the phase shift between the beams;
a range of the phase shift between the beams;
a panel for implementing the beam;
the number of panels for implementing the beam;
an antenna element for implementing the beam; and
the number of antenna elements for implementing the beam.

In a specific embodiment of this application, the transmission parameter related indication information is associated with a time domain resource, and an indication granularity of the time domain resource is a symbol group.

In a specific embodiment of this application, the number of symbols in the symbol group is determined based on a protocol prescription, or based on configuration by the network-side device, or based on an indication of the network-side device.

In a specific embodiment of this application, the symbol group is obtained by dividing a time domain unit.

In a specific embodiment of this application, the time domain unit includes one of a slot, a subframe, a half slot, and a half subframe; or
the time domain unit includes one of an uplink part, a downlink part and a flexible part of a slot; or
the time domain unit includes a time division duplex period; or
the time domain unit includes one of an uplink part, a downlink part, and a flexible part of a time division duplex period; or
the time domain unit includes a time domain unit specified by a protocol or configured by the network-side device.

In a specific embodiment of this application, the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

In a specific embodiment of this application, a pattern of the symbol group is determined based on a protocol prescription, or based on configuration by the network-side device, or based on an indication of the network-side device.

In a specific embodiment of this application, an applicable time period of the transmission parameter related indication information using the symbol group as the indication granularity is determined based on a protocol prescription, or based on configuration by the network-side device, or based on an indication of the network-side device.

In a specific embodiment of this application, each time domain unit corresponds to its own transmission parameter related indication information in the applicable time period, or corresponding symbol groups of different time domain units in the applicable time period correspond to same transmission parameter related indication information.

In a specific embodiment of this application, the transmission parameter related indication information is associated with a time domain resource, and the transmission parameter related indication information includes information indicating a transmission parameter on a periodic time domain resource. The sending module 1020 is configured to:
send the indication signaling carrying the transmission parameter related indication information to the relay device at the beginning of a set time domain resource period or in a time domain resource period before the set time domain resource period; where
the set time domain resource period is a time domain resource period corresponding to the transmission parameter related indication information.

In a specific embodiment of this application, the transmission parameter related indication information is associated with a specific transmission.

In a specific embodiment of this application, the specific transmission includes synchronization signal and PBCH block transmission, and the transmission beam indication information includes: an indicated synchronization signal and PBCH block occasion or resource, and a synchronization signal and PBCH block identifier or beam identifier corresponding to the synchronization signal and PBCH block occasion or resource; or
the specific transmission includes channel state information reference signal transmission or sounding reference signal transmission, and the transmission beam indication information includes: an indicated channel state information reference signal or sounding reference signal occasion or resource, and a reference signal identifier or beam identifier corresponding to the channel state information reference signal or sounding reference signal occasion or resource.

In a specific embodiment of this application, the transmission parameter related indication information includes transmission parameter specific indication information, and transmission parameter activation or deactivation indication information.

In a specific embodiment of this application, the transmission parameter adjustment apparatus 1000 further includes a third determining module, configured to:
after the transmission parameter related indication information for the access link of the relay device is determined and before the indication signaling carrying the transmission parameter related indication information is sent to the relay device, determine, for the network-side device, a validation time of the transmission parameter related indication information;

The sending module 1020 is configured to:
send the indication signaling carrying the transmission parameter related indication information and the validation time of the transmission parameter related indication information to the relay device.

In a specific embodiment of this application, the third determining module is configured to:
determine the validation time of the transmission parameter related indication information based on at least one of the following:
validation time indication information of the network-side device;
the n1-th time unit after a transmission moment of the indication signaling, where n1 is a positive integer; and
the n2-th time unit after a hybrid automatic repeat request feedback moment corresponding to transmission of the indication signaling, where n2 is a positive integer.

In a specific embodiment of this application, the validation time indication information includes:
first validation duration information, where the first validation duration information is determined based on an expected duration of the relay device from an indication signaling receiving moment to a validation moment of the transmission parameter related indication information;
   and/or
second validation duration information, where the second validation duration information is determined based on a duration selected by the relay device from a candidate duration list or a candidate duration range, and the candidate duration list or candidate duration range is configured by the network-side device.

In a specific embodiment of this application, an interval between the hybrid automatic repeat request feedback moment and the n2-th time unit is greater than a preset interval duration; where
the preset interval duration is specified by a protocol, configured by the network-side device, or dynamically indicated by the network-side device, and the preset interval duration includes a duration for demodulating feedback signaling by the network-side device.

In a specific embodiment of this application, the expected duration includes:
a required duration from the indication signaling receiving moment to validation of a new transmission parameter; or
a required duration from the indication signaling receiving moment to enabling of uplink and downlink forwarding; or
a required duration from the indication signaling receiving moment to a moment reaching a forwarding power or amplification factor.

In a specific embodiment of this application, a transmission resource associated with the indication signaling is periodic or quasi-periodic, and the quasi-periodic transmission resource satisfies the following conditions:
if the indication signaling is a physical downlink control channel, a search space of the physical downlink control channel is configured periodically; or
if the indication signaling is higher-layer signaling, a search space of a physical downlink control channel for scheduling transmission of a corresponding physical downlink shared channel is periodically configured.

The transmission parameter adjustment apparatus provided in this embodiment of this application is capable of implementing the processes implemented in the method embodiments in FIG. 9, with the same technical effects achieved. To avoid repetition, details are not described herein again.

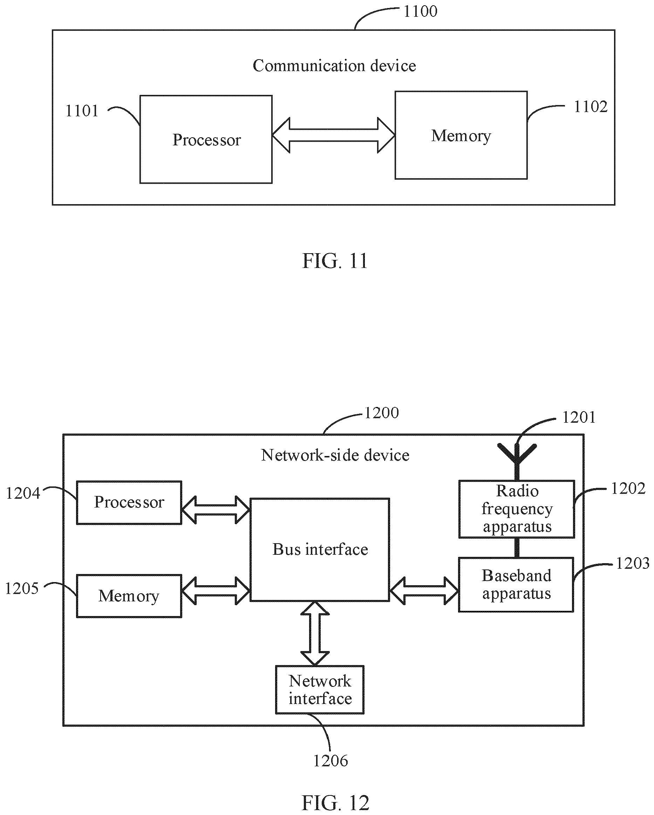

As shown in FIG. 11, an embodiment of this application further provides a communication device 1100, including a processor 1101 and a memory 1102. The memory 1102 stores a program or instructions capable of running on the processor 1101. For example, when the communication device 1100 is a relay device, the program or instructions are executed by the processor 1101 to implement the steps of the corresponding method embodiments of FIG. 2, with the same technical effects achieved. When the communication device 1100 is a network-side device, the program or instructions are executed by the processor 1101 to implement the steps of the corresponding method embodiments of FIG. 9, with the same technical effects achieved. To avoid repetition, details are not described herein again.

Specifically, an embodiment of this application further provides a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The method performed by the network-side device in the foregoing embodiment may be implemented in the baseband apparatus 1203, and the baseband apparatus 1203 includes a baseband processor.

The baseband apparatus 1203 may include, for example, at least one baseband processing unit, where a plurality of chips are disposed on the baseband processing unit. As shown in FIG. 12, one of the chips is, for example, the baseband processor, and connected to the memory 1205 through a bus interface, to invoke the program in the memory 1205 to perform the operations of the network device shown in the foregoing method embodiment.

The network-side device may further include a network interface 1206, where the interface is, for example, a common public radio interface (common public radio interface, CPRI).

Specifically, the network-side device 12000 according to this embodiment of the present invention further includes instructions or programs stored in the memory 1205 and capable of running on the processor 1204, and the processor 1204 calls the instructions or programs in the memory 1205 to execute the methods performed by the modules shown in FIG. 10, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method shown in FIG. 2 or the foregoing embodiments of the method shown in FIG. 9 may be implemented, with the same technical effects achieved. To avoid repetition, details are not described herein again.

The processor is the processor in the communication device in the foregoing embodiment. The readable storage medium includes a computer-readable storage medium, for example, a computer read only memory ROM, a random access memory RAM, a magnetic disk, or an optical disc.

An embodiment of this application further provides a computer program/program product, where the computer program/program product is stored in a storage medium, and when being executed by at least one processor, the computer program/program product is configured to implement the processes of the foregoing embodiments of the method shown in FIG. 2 or the foregoing embodiments of the method shown in FIG. 9, with the same technical effects achieved. To avoid repetition, details are not repeated herein.

An embodiment of this application further provides a communication system, including a relay device and a network-side device, where the relay device can be configured to execute the steps of the method embodiment shown in FIG. 2 described above, and the network-side device can be configured to execute the steps of the method embodiment shown in FIG. 9 described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for indicating a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission parameter adjustment method, comprising:
receiving, by a relay device, indication signaling sent by a network-side device, wherein the indication signaling carries transmission parameter related indication information for an access link of the relay device, and the transmission parameter related indication information comprises transmission beam indication information; and
adjusting, by the relay device, a transmission parameter of the access link based on the transmission parameter related indication information.

2. The transmission parameter adjustment method according to claim 1, wherein the transmission beam indication information is determined based on first beam relationship information; and
the first beam relationship information comprises at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

3. The transmission parameter adjustment method according to claim 2, before the receiving, by a relay device, indication signaling sent by a network-side device, further comprising:
reporting, by the relay device, the first beam relationship information to the network-side device.

4. The transmission parameter adjustment method according to claim 1, wherein the adjusting, by the relay device, a transmission parameter of the access link based on the transmission parameter related indication information comprises:
adjusting, by the relay device, the transmission parameter of the access link based on the transmission beam indication information and a second beam relationship information; wherein
the second beam relationship information comprises at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

5. The transmission parameter adjustment method according to claim 4, wherein the second beam relationship information is determined according to an indication of the network-side device.

6. The transmission parameter adjustment method according to claim 1, wherein the adjusting, by the relay device, a transmission parameter of the access link based on the transmission parameter related indication information comprises:
adjusting, by the relay device, the transmission parameter of the access link based on the transmission beam indication information and beam setting information; wherein
the beam setting information comprises at least one of the following:
a phase shift between beams;
a step of the phase shift between the beams;
a maximum or minimum value of the step of the phase shift between the beams;
a range of the phase shift between the beams;
a panel for implementing the beam;
the number of panels for implementing the beam;
an antenna element for implementing the beam; and
the number of antenna elements for implementing the beam.

7. The transmission parameter adjustment method according to claim 6, wherein the beam setting information is determined according to an indication of the network-side device.

8. The transmission parameter adjustment method according to claim 6, further comprising:
independently determining, by the relay device, the beam setting information and reporting it to the network-side device.

9. The transmission parameter adjustment method according to claim 1, wherein the transmission parameter related indication information further comprises at least one of transmit power indication information, amplification factor indication information, and device on or off indication information.

10. The transmission parameter adjustment method according to claim 1, wherein the transmission parameter related indication information is associated with a time domain resource, and an indication granularity of the time domain resource is a symbol group.

11. The transmission parameter adjustment method according to claim 10, wherein the number of symbols in the symbol group is determined based on a protocol prescription, or based on configuration by the network-side device, or based on an indication of the network-side device.

12. The transmission parameter adjustment method according to claim 10, wherein the symbol group is obtained through division of a time domain unit.

13. The transmission parameter adjustment method according to claim 12, wherein the time domain unit comprises one of a slot, a subframe, a half slot, and a half subframe; or
the time domain unit comprises one of an uplink part, a downlink part and a flexible part of a slot; or
the time domain unit comprises a time division duplex period; or
the time domain unit comprises one of an uplink part, a downlink part, and a flexible part of a time division duplex period; or
the time domain unit comprises a time domain unit specified by a protocol or configured by the network-side device.

14. The transmission parameter adjustment method according to claim 12, wherein the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

15. The transmission parameter adjustment method according to claim 10, wherein a pattern of the symbol group is determined based on a protocol prescription, or based on configuration by the network-side device, or based on an indication of the network-side device.

16. The transmission parameter adjustment method according to claim 10, wherein an applicable time period of the transmission parameter related indication information using the symbol group as an indication granularity is determined based on a protocol prescription, or based on configuration by the network-side device, or based on an indication of the network-side device.

17. The transmission parameter adjustment method according to claim 16, wherein each time domain unit corresponds to its own transmission parameter related indication information in the applicable time period, or corresponding symbol groups of different time domain units in the applicable time period correspond to same transmission parameter related indication information.

18. The transmission parameter adjustment method according to claim 1, wherein the transmission parameter related indication information is associated with a time domain resource, and the transmission parameter related indication information comprises information indicating a transmission parameter on a periodic time domain resource; and the receiving, by a relay device, indication signaling sent by a network-side device comprises:
periodically receiving, by the relay device at the beginning of a set time domain resource period or in a time domain resource period before the set time domain resource period, indication signaling sent by the network-side device; wherein
the set time domain resource period is a time domain resource period corresponding to the transmission parameter related indication information.

19. The transmission parameter adjustment method according to claim 18, further comprising:
for any one time domain resource period, if there is no valid transmission parameter related indication information in the current time domain resource period, performing, by the relay device, device shutdown in the current time domain resource period, or adjusting the transmission parameter of the access link to a preset transmission parameter, or adjusting the transmission parameter of the access link based on recently received transmission parameter related indication information.

20. The transmission parameter adjustment method according to claim 1, wherein the transmission parameter related indication information is associated with a specific transmission.

21. The transmission parameter adjustment method according to claim 20, wherein the specific transmission comprises synchronization signal and PBCH block transmission, and the transmission beam indication information comprises: an indicated synchronization signal and PBCH block occasion or resource, and a synchronization signal and PBCH block identifier or beam identifier corresponding to the synchronization signal and PBCH block occasion or resource; or
the specific transmission comprises channel state information reference signal or sounding reference signal transmission, and the transmission beam indication information comprises: an indicated channel state information reference signal or sounding reference signal occasion or resource, and a reference signal identifier or beam identifier corresponding to the channel state information reference signal or sounding reference signal occasion or resource.

22. The transmission parameter adjustment method according to claim 1, further comprising:
for any one time domain resource, if there is a conflict between multiple pieces of transmission parameter related indication information on the current time domain resource, performing, by the relay device, at least one of the following:
determining that transmission parameter related indication information associated with a specific transmission preferentially takes effect;
if an indication granularity is different for time domain resources of the multiple pieces of transmission parameter related indication information, determining that transmission parameter related indication information with a smallest indication granularity preferentially takes effect;
if the multiple pieces of transmission parameter related indication information carry priority information, determining that transmission parameter related indication information with a highest priority preferentially takes effect;
determining that latest received transmission parameter related indication information preferentially takes effect; and
determining that dynamic transmission parameter related indication information preferentially takes effect than semi-static transmission parameter related indication information.

23. The transmission parameter adjustment method according to claim 1, wherein the transmission parameter related indication information comprises transmission parameter specific indication information, and transmission parameter activation or deactivation indication information.

24. The transmission parameter adjustment method according to claim 1, after the receiving, by a relay device, indication signaling sent by a network-side device and before the adjusting, by the relay device, a transmission parameter of the access link based on the transmission parameter related indication information, further comprising:
determining, by the relay device, a validation time of the transmission parameter related indication information; and
the adjusting, by the relay device, a transmission parameter of the access link based on the transmission parameter related indication information comprises:
in a case that the validation time is reached, adjusting, by the relay device, the transmission parameter of the access link based on the transmission parameter related indication information.

25. The transmission parameter adjustment method according to claim 24, wherein the determining, by the relay device, a validation time of the transmission parameter related indication information comprises:
determining, by the relay device, the validation time of the transmission parameter related indication information based on at least one of the following:
validation time indication information of the network-side device;
the n1-th time unit after a transmission moment of the indication signaling, wherein n1 is a positive integer; and
the n2-th time unit after a hybrid automatic repeat request feedback moment corresponding to transmission of the indication signaling, wherein n2 is a positive integer.

26. The transmission parameter adjustment method according to claim 25, wherein the validation time indication information comprises:
first validation duration information, wherein the first validation duration information is determined based on an expected duration of the relay device from an indication signaling receiving moment to a validation moment of the transmission parameter related indication information;
and/or
second validation duration information, wherein the second validation duration information is determined based on a duration selected by the relay device from a candidate duration list or a candidate duration range.

27. The transmission parameter adjustment method according to claim 25, wherein an interval between the hybrid automatic repeat request feedback moment and the n2-th time unit is greater than a preset interval duration; wherein
the preset interval duration is specified by a protocol, configured by the network-side device, or dynamically indicated by the network-side device, and the preset interval duration comprises a duration for demodulating feedback signaling by the network-side device.

28. The transmission parameter adjustment method according to claim 26, wherein the expected duration comprises:
a required duration from the indication signaling receiving moment to validation of a new transmission parameter; or
a required duration from the indication signaling receiving moment to enabling of uplink and downlink forwarding; or
a required duration from the indication signaling receiving moment to a moment reaching a forwarding power or amplification factor.

29. The transmission parameter adjustment method according to any one of claims 1 to 28, wherein a transmission resource associated with the indication signaling is periodic or quasi-periodic, and the quasi-periodic transmission resource satisfies the following conditions:
if the indication signaling is a physical downlink control channel, a search space of the physical downlink control channel is configured periodically; or
if the indication signaling is higher-layer signaling, a search space of a physical downlink control channel for scheduling transmission of a corresponding physical downlink shared channel is periodically configured.

30. A transmission parameter adjustment apparatus, comprising:
a first receiving module, configured to receive indication signaling sent by a network-side device, wherein the indication signaling carries transmission parameter related indication information for an access link of the relay device, and the transmission parameter related indication information comprises transmission beam indication information; and
an adjustment module, configured to adjust a transmission parameter of the access link based on the transmission parameter related indication information.

31. A transmission parameter adjustment method, comprising:
determining, by a network-side device, transmission parameter related indication information for an access link of a relay device, wherein the transmission parameter related indication information comprises transmission beam indication information; and
sending, by the network-side device, indication signaling carrying the transmission parameter related indication information to the relay device.

32. The transmission parameter adjustment method according to claim 31, wherein the transmission beam indication information is determined based on first beam relationship information; and
the first beam relationship information comprises at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

33. The transmission parameter adjustment method according to claim 32, before the determining, by a network-side device, transmission parameter related indication information for an access link of a relay device, further comprising:
receiving first beam relationship information reported by the relay device.

34. The transmission parameter adjustment method according to claim 31, further comprising:
sending, by the network-side device, first indication information to the relay device, wherein the first indication information is used for determining second beam relationship information; and
the second beam relationship information comprises at least one of the following:
downlink beams with a quasi co-location relation;
downlink beams using a same transmit beam or a same spatial domain transmission filter;
uplink beams using a same receive beam or a same spatial domain reception filter; and
uplink and downlink beams using a same transmit beam and receive beam or a same spatial domain transmission filter and spatial domain reception filter.

35. The transmission parameter adjustment method according to claim 31, further comprising:
sending, by the network-side device, beam setting information to the relay device; wherein
the beam setting information comprises at least one of the following:
a phase shift between beams;
a step of the phase shift between the beams;
a maximum or minimum value of the step of the phase shift between the beams;
a range of the phase shift between the beams;
a panel for implementing the beam;
the number of panels for implementing the beam;
an antenna element for implementing the beam; and
the number of antenna elements for implementing the beam.

36. The transmission parameter adjustment method according to claim 31, wherein the transmission parameter related indication information is associated with a time domain resource, and an indication granularity of the time domain resource is a symbol group.

37. The transmission parameter adjustment method according to claim 36, wherein the number of symbols in the symbol group is determined based on a protocol prescription, or based on configuration by the network-side device, or based on an indication of the network-side device.

38. The transmission parameter adjustment method according to claim 36, wherein the symbol group is obtained through division of a time domain unit.

39. The transmission parameter adjustment method according to claim 38, wherein the time domain unit comprises one of a slot, a subframe, a half slot, and a half subframe; or
the time domain unit comprises one of an uplink part, a downlink part and a flexible part of a slot; or
the time domain unit comprises a time division duplex period; or
the time domain unit comprises one of an uplink part, a downlink part, and a flexible part of a time division duplex period; or
the time domain unit comprises a time domain unit specified by a protocol or configured by the network-side device.

40. The transmission parameter adjustment method according to claim 38, wherein the symbol group is obtained by dividing symbols of the time domain unit in a time-order sequence or a reversed time-order sequence based on a set number of symbols; and
if there are remaining symbols after grouping, the remaining symbols are independently divided into one symbol group, or the remaining symbols do not belong to any symbol group, or the remaining symbols are divided into a nearest symbol group.

41. The transmission parameter adjustment method according to claim 36, wherein a pattern of the symbol group is determined based on a protocol prescription, or based on configuration by the network-side device, or based on an indication of the network-side device.

42. The transmission parameter adjustment method according to claim 36, wherein an applicable time period of the transmission parameter related indication information using the symbol group as an indication granularity is determined based on a protocol prescription, or based on configuration by the network-side device, or based on an indication of the network-side device.

43. The transmission parameter adjustment method according to claim 42, wherein each time domain unit corresponds to its own transmission parameter related indication information in the applicable time period, or corresponding symbol groups of different time domain units in the applicable time period correspond to same transmission parameter related indication information.

44. The transmission parameter adjustment method according to claim 31, wherein the transmission parameter related indication information is associated with a time domain resource, and the transmission parameter related indication information comprises information indicating a transmission parameter on a periodic time domain resource; and the sending, by the network-side device, indication signaling carrying the transmission parameter related indication information to the relay device comprises:
sending, by the network-side device, the indication signaling carrying the transmission parameter related indication information to the relay device at the beginning of a set time domain resource period or in a time domain resource period before the set time domain resource period; wherein
the set time domain resource period is a time domain resource period corresponding to the transmission parameter related indication information.

45. The transmission parameter adjustment method according to claim 31, wherein the transmission parameter related indication information is associated with a specific transmission.

46. The transmission parameter adjustment method according to claim 45, wherein the specific transmission comprises synchronization signal and PBCH block transmission, and the transmission beam indication information comprises: an indicated synchronization signal and PBCH block occasion or resource, and a synchronization signal and PBCH block identifier or beam identifier corresponding to the synchronization signal and PBCH block occasion or resource; or
the specific transmission comprises channel state information reference signal or sounding reference signal transmission, and the transmission beam indication information comprises: an indicated channel state information reference signal or sounding reference signal occasion or resource, and a reference signal identifier or beam identifier corresponding to the channel state information reference signal or sounding reference signal occasion or resource.

47. The transmission parameter adjustment method according to claim 31, wherein the transmission parameter related indication information comprises transmission parameter specific indication information, and transmission parameter activation or deactivation indication information.

48. The transmission parameter adjustment method according to claim 31, after the determining, by a network-side device, transmission parameter related indication information for an access link of a relay device, and before the sending, by the network-side device, indication signaling carrying the transmission parameter related indication information to the relay device, further comprising:
determining, by the network-side device, a validation time of the transmission parameter related indication information; and
the sending, by the network-side device, indication signaling carrying the transmission parameter related indication information to the relay device comprises:
sending, by the network-side device, the indication signaling carrying the transmission parameter related indication information and the validation time of the transmission parameter related indication information to the relay device.

49. The transmission parameter adjustment method according to claim 48, wherein the determining, by the network-side device, a validation time of the transmission parameter related indication information comprises:
determining, by the network-side device, the validation time of the transmission parameter related indication information based on at least one of the following:
validation time indication information of the network-side device;
the n1-th time unit after a transmission moment of the indication signaling, wherein n1 is a positive integer; and
the n2-th time unit after a hybrid automatic repeat request feedback moment corresponding to transmission of the indication signaling, wherein n2 is a positive integer.

50. The transmission parameter adjustment method according to claim 49, wherein the validation time indication information comprises:
first validation duration information, wherein the first validation duration information is determined based on an expected duration of the relay device from an indication signaling receiving moment to a validation moment of the transmission parameter related indication information;
and/or
second validation duration information, wherein the second validation duration information is determined based on a duration selected by the relay device from a candidate duration list or a candidate duration range, and the candidate duration list or candidate duration range is configured by the network-side device.

51. The transmission parameter adjustment method according to claim 49, wherein an interval between the hybrid automatic repeat request feedback moment and the n2-th time unit is greater than a preset interval duration; wherein
the preset interval duration is specified by a protocol, configured by the network-side device, or dynamically indicated by the network-side device, and the preset interval duration comprises a duration for demodulating feedback signaling by the network-side device.

52. The transmission parameter adjustment method according to claim 50, wherein the expected duration comprises:
a required duration from the indication signaling receiving moment to validation of a new transmission parameter; or
a required duration from the indication signaling receiving moment to enabling of uplink and downlink forwarding; or
a required duration from the indication signaling receiving moment to a moment reaching a forwarding power or amplification factor.

53. The transmission parameter adjustment method according to any one of claims 31 to 52, wherein a transmission resource associated with the indication signaling is periodic or quasi-periodic, and the quasi-periodic transmission resource satisfies the following conditions:
if the indication signaling is a physical downlink control channel, a search space of the physical downlink control channel is configured periodically; or
if the indication signaling is higher-layer signaling, a search space of a physical downlink control channel for scheduling transmission of a corresponding physical downlink shared channel is periodically configured.

54. A transmission parameter adjustment apparatus, comprising:
a second determining module, configured to determine transmission parameter related indication information for an access link of a relay device, wherein the transmission parameter related indication information comprises transmission beam indication information; and
a sending module, configured to send indication signaling carrying the transmission parameter related indication information to the relay device.

55. A relay device, comprising a processor and a memory, wherein the memory stores a program or instructions capable of running on the processor, and when the program or instructions are executed by the processor, the steps of the transmission parameter adjustment method according to any one of claims 1 to 29 are implemented.

56. A network-side device, comprising a processor and a memory, wherein the memory stores a program or instructions capable of running on the processor, and when the program or instructions are executed by the processor, the steps of the transmission parameter adjustment method according to any one of claims 31 to 53 are implemented.

57. A readable storage medium, wherein the readable storage medium stores a program or instructions, and when the program or instructions are executed by a processor, the steps of the transmission parameter adjustment method according to any one of claims 1 to 29 are implemented, or the steps of the transmission parameter adjustment method according to any one of claims 31 to 53 are implemented.
